# EUROPÄISCHE PATENTANMELDUNG

(11) **EP 1 498 166 A1**
(43) Veröffentlichungstag der Anmeldung: **19.01.2005**
(21) Anmeldenummer: 03015966.9
(22) Anmeldetag: 14.07.2003
(51) Int. Cl.: B01D 1/02

(54) **Verfahren und Anlage zum Verdampfen von Flüssigkeiten im Unterdruck**

(71) Anmelder: Hündgen Rick, Dorothea, 53797 Lohmar (DE)
(72) Erfinder: Hündgen Rick, Dorothea, 53797 Lohmar (DE)

(57) **Zusammenfassung**

Die Erfindung befasst sich mit der Verdampfung von Flüssigkeiten im Unterdruckbereich, indem die Kondensationsenergie einer Flüssigkeit nach dem Verdampfen in der Form dem Prozess wieder zugeführt werden kann, dass nach der Verdampfung der Dampf in einen Wärmetauscher geleitet wird, der durch einen Absperreinrichtung von Verdampferraum abgesperrt werden kann. In den Wärmetauscher wird dann aus einer zweiten Energiequelle Gas mit höherem Druck und höherer Temperatur zugeführt. Dadurch werden Kondensationstemperatur und Druck im Wärmetauscher erhöht. Das Gas kondensiert bei höherer Temperatur aus als die im Verdampfungsbehälters. Die Kondensationsenthalpie geht so als Energie von dem Kondensat an die noch zu verdampfende Flüssigkeit über.

## Beschreibung

### 1. Technische Grundlagen

Wasser oder andere Flüssigkeiten werden zwei Gründen verdampft:
1. Zum Aufkonzentrieren bestimmter Inhaltstoffe, indem das Lösungsmittel verdampft wird, oder
2. Zum Destillieren einer Flüssigkeitsphase aus einer Lösung verschiedener Inhaltstoffe.

Unter verschiedenen Verfahren kommt hier auch die Verdampfung bei Unterdruck zum Tragen. Der Vorteil besteht vor allem in der niedrigeren Verdampfungstemperatur, durch die der Energieeinsatz insgesamt minimiert werden kann. Auch prozesstechnisch können hier Vorteile erzielt werden bei der Verdampfung von Crackprodukten.

Für die weitere Beschreibung des Verfahrens wird aber die Verdampfung von Wasser als Anwendungsbeispiel herangezogen, obwohl der Prozess an sich auch auf andere Flüssigkeiten anwendbar ist.

In der folgenden Tabelle ist ersichtlich, dass zur Verdampfung von Wasser bei 100 Grad Cel ca. die 5fache Energie (Enthalpie) erforderlich ist wie zur Erwärmung des Wassers von 0 auf 100 °Cel. Bei niedrigeren Verdampfungstemperaturen (z.B. 50°Cel) wird zwar nur die hälfte der Erwärmungsenergie benötigt, aber zur Verdampfung des Wassers mehr als die Enthalpie bei 100 °Cel.

**Tabelle 1:**

| Energie und Enthalpie von Wasser bei unterschiedlichen Temperaturen | | |
|---|---|---|
| Temp | 50°Cel | 100°Cel |
| Erwärmungsenergie (kJ/kg) | 209,1 | 418,9 |
| Verdampfungsenthalpie (kJ/kg) | 2382,1 | 2255,6 |
| Summe (kJ/kg) | 2591,2 | 2674,4 |

Wird Wasser bei einem Druck von 0,1298 bar verdampft, stellt sich eine Verdampfungstemperatur von 50 °Cel ein. Der erzeugte Dampf hat ebenfalls eine Temperatur von 50°Cel.

Zur Verdampfung einer Flüssigkeit im Unterdruckbereich wird in der Regel in einem teilbefüllten Kessel mittels einer Pumpeinrichtung ein Unterdruck erzeugt. Dann wird der Flüssigkeit über einen Wärmetauscher die erforderliche Verdampfungsenergie bezogen auf den erreichten Unterdruck zugeführt. Die Flüssigkeit verdampft. Der Dampf wird aus dem Behälter abgezogen und über einen Kühler kondensiert:

Entsprechend den thermodynamischen Gegebenheiten wird für die Erwärmung des Wassers Energie von ca. 4,182 kJ*Kg⁻¹*K⁻¹ benötigt. Für die Verdampfung des Wassers bei Verdampfungstemperatur wird noch einmal je nach Temperaturniveau zwischen 2453 kJ* Kg⁻¹ bei 20°Cel, 0,024 bar und 2256 kJ* Kg⁻¹ bei 100 °Cel und 1013 mbar benötigt.

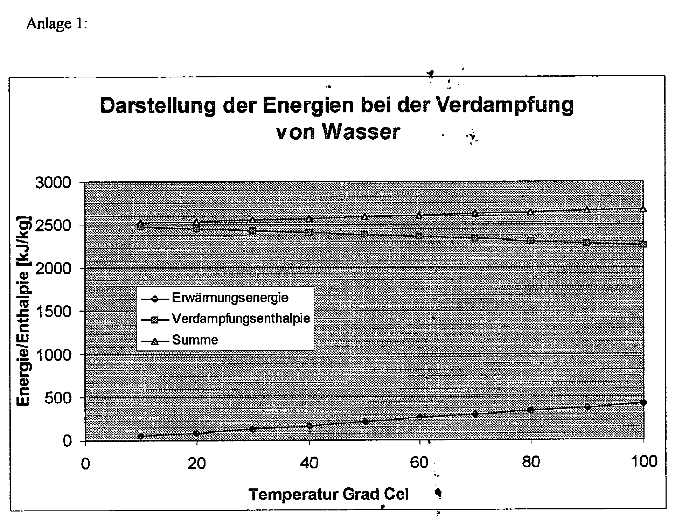

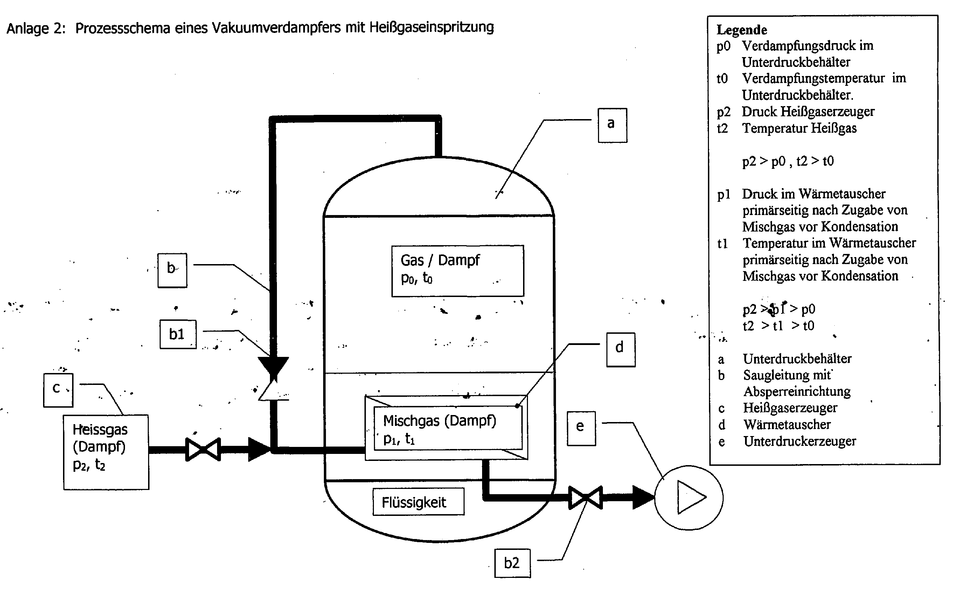

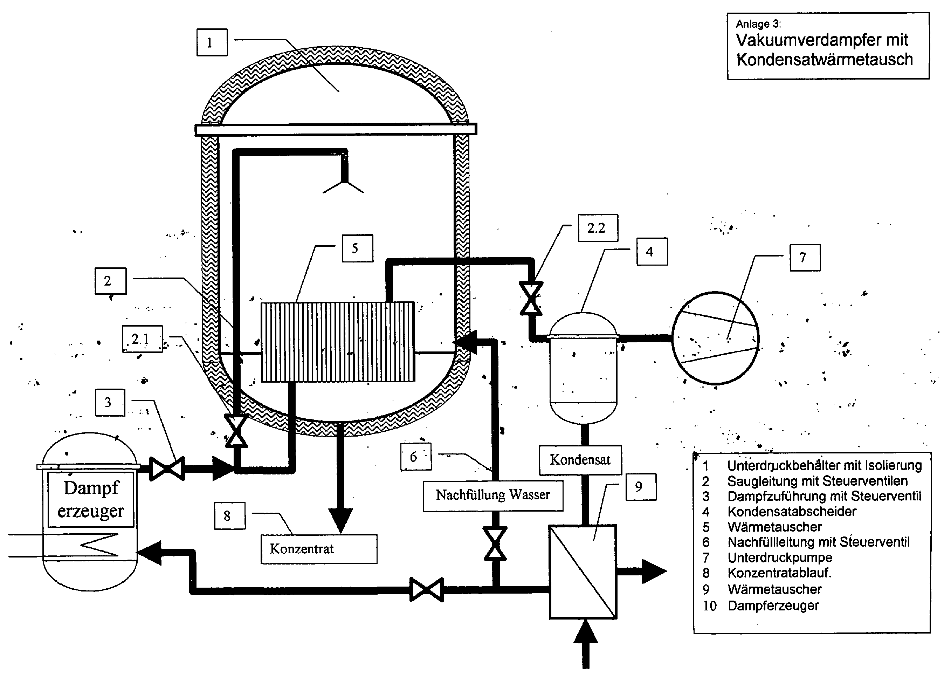

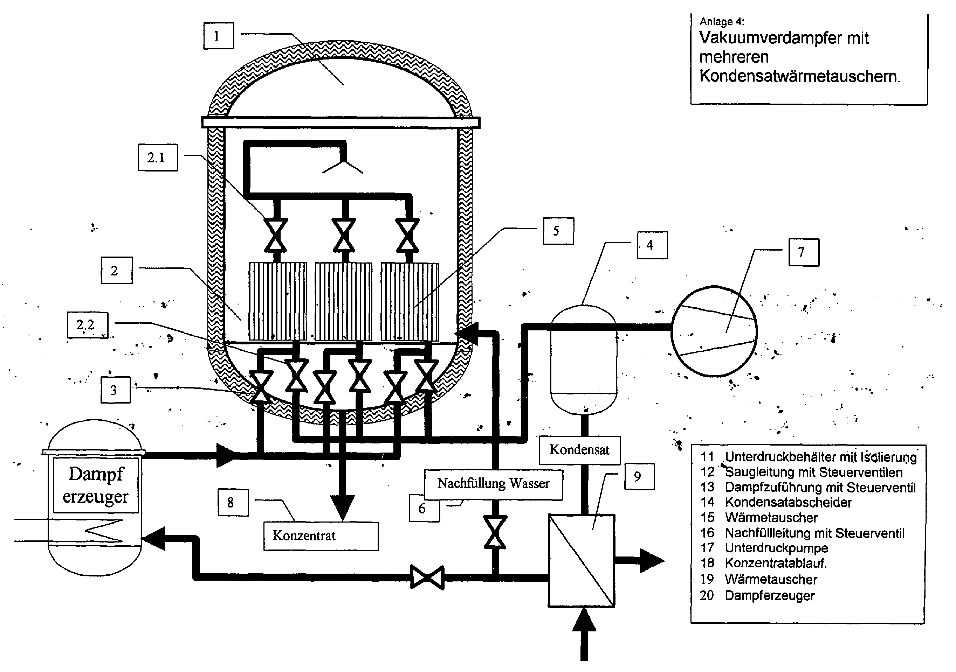

In Bild 1 der Zeichnungen ist die erforderliche Energie und Enthalpie zur Verdampfung von Wasser bei entsprechender Temperatur aufgezeigt.

Die bei der Verdampfung eingesetzte Energie wird bei der Kondensation der Flüssigkeit wieder frei. Um eine Flüssigkeit zum Kondensieren zu bringen muss die Kondensationsenthalpie abgeführt werden. Diese Energie kann aber nur dann technisch wieder eingesetzt werden, wenn ein entsprechendes Temperaturgefälle zur Verfügung steht.

In konventionellen Anlagen erfolgt dies durch den Einsatz von Kühlern. Die Kondensationsenthalpie wird in das Kühlwasser abgeführt. Da das Kühlwasser ein tieferes Temperaturniveau hat wie die zu verdampfende Flüssigkeit, ist eine Rückführung der Kondensationsenthalpie zum Zweck der Verdampfung nicht ohne weiteres möglich.

Um die Kondensationsenthalpie für den Verdampfungsprozess wieder technisch nutzbar zu machen, ist es erforderlich, die aus der Kondensation gewonnene Energie auf einem höheren Temperaturniveau wieder zur Verfügung zu stellen, als für die Verdampfung erforderlich ist.

### 2. Stand der Technik

Bei herkömmlichen Verdampfungsanlagen ist die Rückgewinnung der Kondensationsenthalpie für den Prozess beschränkt auf die Erwärmung des Wassers auf Verdampfungstemperatur mit der zur Verfügung stehen Enthalpie. Hiermit kann zum Beispiel bei einer Verdampfung bei 50°Cel max. 8% der Energie in den Prozess zurückgeführt werden. 92% der Energie muss durch Sekundärkühlung abgeführt werden.

In einem fortgeschrittenen Verfahren wird diese Energie über eine Wärmepumpe (Thomson-Prozess) aufgenommen und auf einem höheren Temperaturniveau als der Verdampfungstemperatur wieder dem Prozess zugeführt. Hierdurch kann die Effizienz einer solchen Anlage von 8% auf ca. 70 - 75% gesteigert werden. Dafür ist aber auch ein erheblicher Maschinenaufwand erforderlich, vor allem bei großen Anlagen.

In einem weiteren Verfahren wird der Dampf aus dem Verdampfungsprozess über einen Brüdenverdichter auf ein höheres Temperatur- und Druckniveau gebracht. Auf diesem Druckniveau wird der Dampf über einen Wärmetauscher ausköndensiert. Die Kondensationsenthalpie, die dann bei einer höheren Temperatur frei wird, wird dem Verdampfungsprozess wieder zugeführt.

Auch diese Anlage sind nur mit großem Aufwand zu betreiben. Viel Energie geht durch frühzeitige Kondensation vor dem Brüdenverdichter verloren. Im Unterdruckbereich ist die Wellenabdichtung am Verdichter oft die Schwachstelle.

Ziel dieser Erfindung ist es, ein Verfahren vorzustellen verbunden mit einer Anlagentechnik, die es erlaubt, die Verdampfungsenthalpie des Wassers als Energie wieder zur Verfügung zu stellen, indem der Dampf auf ein höheres Temperaturniveau angehoben wird und so dem Verdampfungsprozess als Energie wieder zur Verfügung steht.

### 3. Beschreibung des Verfahrens

Das in dieser Erfindung beschriebene Verfahren zielt darauf ab, dem Gas der Flüssigkeit schon vor dem Kondensatwärmetauscher Energie in einer anwendbaren Form zuzuführen, um Druck und Temperatur der Kondensation nach oben zu verändern. Unter diesen Bedingungen kann der Kondensatwärmetauscher in den Verdampfungsprozess integriert werden, da die Kondensation des Gases auf einem höheren Druck und Temperaturniveau stattfindet, und die frei werdende Kondensationsenthalpie als Energie in die zu verdampfende Flüssigkeit abgeführt werden kann.

Der Prozess wird am Beispiel von Wasser dargestellt. Der hierzu erforderliche Prozess läuft wie folgt ab (Bild 1):

Der Behälter (a) wird durch den Unterdruckerzeuger (e) über die Leitung (b) und den Wärmetauscher (d) evakuiert. Bei erreichen des Verdampfungsdrucks beginnt die Flüssigkeit zu sieden. Der Dampf wird durch den Unterdruckerzeuger (e) in den Wärmetauscher (d) gesaugt. Wenn der Wärmetauscher (d) mit Sattdampf aus dem Behälter (a) gefüllt ist, wird aus dem Dampferzeuger (c) Heißgas mit einem höheren Druck und höherer Temperatur in den Wärmetauscher (d) eingemischt. Die Absperreinrichtungen (b1 und b2) in Leitung (b) gewährleistet, dass Druck- und Temperaturerhöhung nur im Wärmetauscher, nicht im Verdampfungsbehälter stattfindet.
Durch die Beimischung des Heißgases werden Temperatur und Druck im Wärmetauscher erhöht. Das entstandene Mischgas kondensiert jetzt auf Grund des entstandenen Temperaturgefälles zwischen zu verdampfenden Flüssigkeit im Verdampfungskessel und Heißgas im Wärmetauscher (d) aus und gibt die frei werdende Kondensationsenergie an die Flüssigkeit ab. Die Flüssigkeit nimmt die Energie und setzt diese in Verdampfungsenergie um solange, bis Temperatur und Druck im Verdampfungsraum wieder im Gleichgewicht sind. Durch die Kondensation wird der Überdruck im Wärmetauscher (d) schnell wieder abgebaut bis auf den Anteil, der sich aus der Volumenänderung des Kondensats des Heißgasanteils ergibt. Über den Unterdruckerzeuger (e) wird dieser Restüberdruck abgebaut durch öffnen der Absperreinrichtung (b2). Bei Erreichen des Verdampfungsdrucks im Kessel öffnet Absperreinrichtung (b1) und der Prozess beginnt von neuem.

Eine zu diesem Verfahren geeignete Anlage wird im Folgenden Beschrieben:

In einem Behälter (1) wird durch einen Unterdruckerzeuger (7) über die Leitung (2) und den Wärmetauscher (5) ein Unterdruck erzeugt. Das zu verdampfende Wasser wird über die Leitung (6) eingefüllt. Um den Prozess anzulaufen ist das Wasser auf Betriebstemperatur zu erwärmen. Bei Erreichen des Verdampfungsdrucks über den Unterdruckerzeuger beginnt das Wasser im Kessel an zu verdampfen. Der Dampf wird über die Leitung (2) in den Wärmetauscher (5) gesaugt. Die Steuerventile (2.1) und (2.2) in Leitung (2) werden geschlossen. Gleichzeitig öffnet das Steuerventil in Leitung (3) und zu dem Dampf aus dem Verdampferkessel wird Heißdampf beigemischt.

Durch die Beimischung von Heißdampf wird im Wärmetauscher der Betriebsdruck erhöht. Das Dampfgemisch wird verdichtet. Gleichzeitig wird dem System Energie zugeführt, die erforderlich ist, um das Dampfgemisch im Heißdampfbereich zu halten.

Absperreinrichtung 3 wird bei erreichen des gewünschten Heißdampfdruckes wieder geschlossen.

Das im Wärmetauscher verdichtete Heißdampfgemisch kondensiert auf der Oberfläche des Wärmetauschers aus. Die frei werdende Kondensationsenergie wird über den Wärmetauscher an das Wasser im Verdampfungsbehälter abgegeben, da sich durch den höheren Druck des Heißdampfgemisches auch ein höhere Kondensationstemperatur einstellt.

Durch das Auskondensieren des Dampfes wird der Druck des Heißdampfgemisches unmittelbar im Wärmetauscher 5 wieder abgebaut. Der verbleibende Druck nach der Kondensation ist um den Anteil höher gegenüber dem Druck im Verdampfungsbehälter, der als Kondensatvolumen übrig geblieben ist. Dieser Überdruck wird durch den Unterdruckerzeuger 7 wieder abgebaut.

Bei Erreichen des erforderlichen Dampfdruckes im Verdampfungsbehälter werden die Ventile 2.1 und 2.2 wieder geöffnet und der kalte Wasserdampf aus dem Verdampfungsbehälter wird wieder abgesaugt.

Das Kondensat wird mit dem Unterdruckerzeuger über die Leitung 2 abgesaugt und im

Kondensatabscheider 4 abgeschieden. Die Restwärme aus dem Kondensat wird über einen Wärmetauscher genutzt, um das noch zu verdampfende Wasser auf Betriebstemperatur zu bringen.

Die Steuerung der Ventile 2.1, 2.2 und 3 sind abhängig von der Auslegung der Anlagenkomponenten. Ventil 2 wird durch den Verdampferinnendruck geregelt, Ventil 3 durch den Heißdampfdruck im Wärmetauscher 5. Bei strömungstechnisch günstiger Auslegung der Saugleitung 2 kann das Ventil 2.2 auch entfallen.

Der Verdampferkessel ist so konstruiert, dass eine Kondensation des Dampfes an den Außenwänden des Kessels vermieden wird. Dazu ist es erforderlich, den Kessel zu isolieren und/oder mit einer Begleitheizung auszustatten, das Wandtemperaturen unterhalb der Verdampfungstemperatur im Kessel vermieden werden.

Um einen gleichmäßigen Verdampfungsverlauf zu erreichen, können mehrere Wärmetauscher parallel installiert und mit Regelventilen ausgerüstet werden (Bild 4).

## Patentansprüche

1. Verfahren zur Verdampfung von Flüssigkeiten bei Drücken unterhalb des Umgebungsdrucks in dem der Druck in einem Unterdruckbehälter durch einen Unterdruckerzeuger (Pumpe oder Venturi) auf einen vorgegebenen Druck abgesenkt wird und die Flüssigkeit durch Zuführen von Wärme zum Verdampfen gebracht wird,
**dadurch gekennzeichnet, dass** Gas (Dampf) aus einem Unterdruckbehälter (a) durch einen Unterdruckerzeuger (e) in einen Wärmetauscher (d) geleitet wird, und dort mit Gas (c) einer höheren Temperatur und einem höheren Druck als im Unterdruckbehälter vermischt wird, sodass das neu entstandene Gasgemisch im Wärmetauscher (d) auf Grund der Temperaturdifferenz zu der noch nicht verdampften Flüssigkeit im Unterdruckbehälter (a) bei einem höheren Druck und höherer Temperatur auskondensieren kann und so die Kondensationsenergie durch die Temperaturdifferenz zwischen Kondensat im Wärmetaucher (d) und Flüssigkeit im Unterdruckbehälter (a) an die Flüssigkeit abgegeben werden kann.

2. Verfahren zur Verdampfung von Flüssigkeiten nach Anspruch 1
**dadurch gekennzeichnet, dass** die Saugleitung (b) durch eine Absperreinrichtung vor und hinter dem Wärmetauscher (d) geschlossen werden kann, um dadurch einen vom Unterdruck unabhängigen Druckraum zu schaffen.

3. Verfahren zur Verdampfung von Flüssigkeiten nach Anspruch 1
**dadurch gekennzeichnet, dass** durch strömungstechnisch günstig ausgelegte Rohrdimensionierung der Saugleitung vor dem Wärmetauschers die Absperreinrichtung 2.2 hinter dem Wärmetauscher auch entfallen kann.

4. Verfahren zur Verdampfung von Flüssigkeiten nach Anspruch 1
**dadurch gekennzeichnet, dass** durch strömungstechnisch günstig ausgelegte Rohrdimensionierung der Saugleitung die Absperreinrichtung vor dem Wärmetauscher entfallen kann.

5. Anlage zur Verdampfung von Flüssigkeiten nach Anspruch 1 mit einem Behälter, im dem ein Unterdruck erzeugt werden kann und in dem ein Wärmetauscher installiert ist,
**dadurch gekennzeichnet, dass** das die Absaugleitung (2) aus dem Behälter in Reihe mit dem Wärmetauscher (5) geschaltet ist, und dass vor und hinter dem Wärmetauscher eine Absperreinrichtung installiert ist.

6. Anlage zur Verdampfung von Flüssigkeiten nach Anspruch 5
**dadurch gekennzeichnet,** das die Saugleitung strömungsfechnisch so ausgestaltet werden kann, dass die Ventile vor und hinter dem Wärmetauscher entfallen können.

7. Anlage zur Verdampfung von Flüssigkeiten nach Anspruch 5
**dadurch gekennzeichnet, dass** neben dem Unterdruckverdampfer ein Heißgaserzeuger installiert ist, der über ein Steuerventil (3) Heißgas mit einer höheren Temperatur als das Gas aus dem Unterdruckbehälter in den Bereich hinter dem Steuerventil der Saugleitung (2) zudosieren kann.

8. Anlage zur Verdampfung von Flüssigkeiten nach Anspruch 5
**dadurch gekennzeichnet, dass** hinter dem Steuerventil 2.2 ein Kondensatabscheider installiert ist, der das Kondensat aus dem Wärmetauscher 5 sammelt und dass dieser Kondensatabscheider mit einem weiteren Wärmetauscher (9) ausgerüstet ist, über den die zulaufenden noch zu verdampfende Flüssigkeit mit der im Kondensat verbliebenen Energie aufgewärmt werden kann.

9. Anlage zur Verdampfung von Flüssigkeiten nach Anspruch 5
**dadurch gekennzeichnet, dass** der Verdampferbehälter mit einer Isolierung und einer Begleitheizung ausgestattet ist, die mit dem Kondensat aus dem Kondensatabscheider gespeist wird.

10. Anlage zur Verdampfung von Flüssigkeiten nach Anspruch 5
**dadurch gekennzeichnet, dass** in dem Verdampferbehälter auch mehr als ein Wärmetauscher installiert werden kann, sodass durch einen geeignete Steuerung ein kontinuierlichern Verdampfungsprozess im Unterdruckbehälter entsteht.
